# EUROPEAN PATENT APPLICATION

(11) **EP 2 835 674 A1**
(43) Date of publication of application: **11.02.2015**
(21) Application number: 13003974.6
(22) Date of filing: 09.08.2013
(51) Int. Cl.: G02B 6/02, G21K 1/00

(54) **Method of operating a flying transducer particle in an optical waveguide, and optical waveguide including a transducer particle**

(71) Applicant: Max-Planck-Gesellschaft zur Förderung der Wissenschaften e.V., 80539 München (DE)
(72) Inventor: Russell, Philip St.J., 91341 Röttenbach (DE); Euser, Tijmen G., 91058 Erlangen (DE); Schmidt, Oliver A., 91054 Erlangen (DE)
(74) Representative: Beier, Ralph

(57) **Abstract**

A method of operating a transducer particle (2) in an optical waveguide (10) having a hollow core channel (11), wherein the transducer particle (2) is movably arranged in the core channel (11), comprises the steps of arranging the optical waveguide (10) in an external environment (1) of the optical waveguide (10), moving and/or positioning the transducer particle (2) by optical forces in the core channel (11), measuring a current position of the transducer particle (2) in the optical waveguide (10), and changing a condition of at least one of the transducer particle (2) and the external environment (1) by a mutual physical interaction of the transducer particle (2) and the external environment (1), wherein said condition is changed in dependency on the current position of the transducer particle. The method can be used e. g. for sensing a physical quantity of the external environment (1) and/or illuminating the external environment (1) in dependency on the current position of the transducer particle. Furthermore, an optical waveguide device (100) is described, which includes a movable transducer particle (2).

## Description

### Technical field

The present invention relates to a method of operating a transducer particle in a hollow optical waveguide, like a hollow optical fibre, e. g. a photonic crystal fibre (PCF), wherein the transducer particle is movably arranged in the optical waveguide (so-called flying particle). Furthermore, the present invention relates to an optical waveguide device including a hollow optical waveguide with a movable transducer particle. Applications of the invention are available in the fields of investigating and/or illuminating an external environment of the optical waveguide.

### Technical background

In the present specification, reference is made to the following publications cited for illustrating conventional optical fibres and techniques of using thereof:
[1] O. A. Schmidt et al., Physical Review Letters 109, 024502 (2012),
[2] O. A. Schmidt et al., Optics Letters 37, 91-93 (2012),
[3] S. Unterkofler et al., Journal of Biophotonics, 1-10 (2012),
[4] M. K. Garbos et al., Optics Express 19, 19643-19652 (2011),
[5] M. K. Garbos et al., Optics Letters 36, 2020-2022 (2011),
[6] O. A. Schmidt et al., CLEO/Europe - IQEC 2013 (Optical Society of America), paper CL-2/ECBO.2 SUN (2013),
[7] T. G. Euser et al., Optics Letters 34, 3674-3676 (2009), Erratum: Optics Letters 35, 2142-2142 (2010),
[8] T. G. Euser et al., Optics Express 16, 17972-17981 (2008),
[9] B. Lee et al., Optical Fiber Technology 9, 57-79 (2003),
[10] V. G. M. Annamdas et al., International Journal of Materials Engineering 1, 1-16 (2011),
[11] S. J. Mihailov et al., Sensors 12, 1898-1918 (2012),
[12] S. O'Keeffe et al., Sensor Review 28, 136-142 (2008),
[13] P. Gravesen et al., Journal of Micromechanics and Microengineering 3, 168-182 (1993),
[14] K. C. Neuman et al., Review of Scientific Instruments 75, 2787-2809 (2004),
[15] J. R. Moffitt et al., Annual Review of Biochemistry 77, 205-228 (2008), and
[16] Benabid et al., Optics Express 10, 1195-1203 (2002).

It is generally known to use optical fibre sensors for measuring physical quantities, like strain, temperature, bending or pressure ([9] - [12]). Unlike electronic sensors, fibre sensors offer immunity from electromagnetic interference and can be operated at high temperatures and in the presence of ionising radiation. The best spatial resolution is obtained using fibres including Bragg gratings (FBGs), which are inscribed at fixed points along the fibre and act as localized mirrors. By adapting each grating different wavelengths of reflection, and/or using time-domain techniques, it is possible to track changes in strain or temperature at a series of fixed points along the fibre. However, FBGs have a disadvantage in terms of limited adaptability to changing sensing tasks. In particular, the multiplexed systems, once installed, are not reconfigurable. Reconfigurable fibre sensors are based either on Brillouin scattering (by acoustic phonons in the core) or on Raman scattering (by optical phonons in glass). However, the spatial resolution of these sensors, typically several metres, is much poorer than for FBGs. Thus, as a general disadvantage of conventional optical fibre sensors, no technique currently exists that would permit reconfigurable measurements, with high spatial resolution, in hostile environments (e.g., high temperature, radioactive).

A new class of optical fibres comprises hollow core photonic crystal fibres (PCFs) which are utilized for multiple purposes, like e. g. for creating or manipulating ultrashort laser pulses. It has been proposed to load and move particles into gas-filled PCFs ([16]) or liquid-filled PCFs ([4], [5] and [7]). Particles are trapped and moved using optical forces ([14], [15]), which are created with laser fields coupled into the PCF ([1-8], [16]). The particle can be called flying particle as it is trapped and/or moved in a levitated condition without a mechanical contact with the fibre. The particles can be used for investigating the internal light field distribution (mode structure) within the PCF ([5]), or detecting or manipulating particle properties ([3], [6]). Liquid-filled PCFs can be used similar like microfluidic circuits ([13]) for transporting and sorting particles. However, conventional practical applications of PCFs were restricted to utilizing physical interactions within the PCF. Conventional fibres are not suitable for sensing conditions of an external environment with high spatial resolution.

Furthermore, it is generally known to use optical fibres for light coupling and illuminating purposes. Conventionally, extracting light from an optical fibre is provided at a fibre end, or it requires some form of tapping device, such as a directional coupler or a grating. These are permanently built into the optical fibre at fixed points, and cannot easily be altered or added after installation. In optical fibres such light taps commonly take the form of a tilted long-period grating.

In summary, the conventional applications of optical fibres, in particular for sensing or illuminating purposes, suffer from restricted capability of adapting a system to a particular task. In particular, conventional applications of optical fibres have a restricted capability of sensing conditions of an external environment or illuminating the external environment with high spatial resolution.

### Objective of the invention

It is an objective of the invention to provide an improved method of operating a movable particle in an optical waveguide having a hollow core channel, being capable of avoiding disadvantages and limitations of conventional techniques. In particular, it is an objective of the invention to provide an improved method, which is capable of sensing conditions of an external environment of the optical waveguide and/or illuminating the external environment with spatial resolution. Furthermore, it is an objective of the invention to provide an improved optical waveguide device, having new applications for sensing and illuminating tasks.

These objectives are solved with a method and an optical waveguide device as defined in the independent claims, resp.. Advantageous embodiments and applications of the invention are defined in the dependent claims.

### Summary of the invention

According to a first general aspect of the invention, the above objective is solved by a method of operating a movable particle in an optical waveguide, like an optical fibre, having a hollow core channel, e. g. a PCF, wherein the transducer particle (so-called flying particle) is movably arranged in the core channel. The optical waveguide is arranged in an external environment of interest. The transducer particle is levitated by optical forces in the hollow core channel, and it is moved and/or positioned by the optical forces in the core channel. The optical forces are created by at least one light field coupled into the optical waveguide, wherein the light field is created e. g. with a laser source or another type of light source. A condition of at least one of the transducer particle and the external environment of the optical waveguide is changed by a mutual physical interaction of the transducer particle and the external environment with spatial resolution.

According to the invention, a current axial position of the transducer particle in the optical waveguide is measured. As the optical waveguide is arranged in the external environment in a distributed manner and the arrangement of the optical waveguide is fixed during the inventive operating method, the measured axial position of the transducer particle corresponds to a spatial location in the environment. Furthermore, according to the invention, the condition of the transducer particle and/or the external environment is changed in dependency on the current position of the transducer particle. Thus, changing the condition with spatial resolution means that the condition is varied as a function of the current position of the transducer particle along the optical waveguide and within the environment, resp.. The current position can be a fixed position, created by a temporally fixed optical trap, or a changing position of a moving particle. The inventive method can be used e. g. for sensing a physical quantity of the external environment and/or illuminating the external environment in dependency on the current position of the transducer particle.

According to a second general aspect of the invention, the above objective is solved by an optical waveguide device comprising an optical waveguide, like an optical fibre, having a hollow core channel, e. g. a PCF, a transducer particle being movably arranged in the core channel, a light source device, e. g. at least one laser source and/or at least one light-emitting diode (LED), being arranged for coupling at least one light field into the optical waveguide and for moving and/or positioning the transducer particle by optical forces along the optical waveguide, wherein the optical forces can be created with the light field, and a measuring device being arranged for measuring a current position of the transducer particle in the optical waveguide. The light source device is separately arranged, or it is integrated as a part of the optical waveguide. Furthermore, the light source device is configured for creating the at least one light field with a narrowband wavelength or a broadband wavelength distribution, included in the ultraviolet wavelength range, the visible wavelength range or the infrared wavelength range. According to the invention, the optical waveguide device is arranged for changing a condition of at least one of the transducer particle and the external environment by a mutual physical interaction of the transducer particle and the external environment, wherein said condition can be changed in dependency on the current position of the transducer particle.

Changing the condition comprises varying a measurable feature of the transducer particle and/or the external environment resulting from the mutual physical interaction, e. g. a radiation interaction (like thermal radiation, ionizing radiation or light radiation), an electric interaction, a magnetic interaction, and/or a mechanical interaction (coupled via inert forces), of the transducer particle and the external environment. The condition of the transducer particle (or: the measurable feature of the transducer particle), like geometrical, mechanical or optical features thereof, can be changed by a physical impact from the surrounding environment, like e. g. the temperature thereof or ionizing radiation in the environment. Furthermore, the condition of the environment (or: the measurable feature of the environment), like an illumination light field applied to the environment, can be changed by a physical impact from the transducer particle, like the emission of light into the environment.

With the inventive spatially resolved changing of the measurable feature of the transducer particle and/or the external environment, new applications of PCFs are provided. For the first time, the transducer particle is utilized as a tool for sensing features of the environment and/or illuminating the environment at well-controlled positions. With preferred examples, the invention provides a flying particle sensor or light source in a hollow-core optical waveguide. The main advantage of the invention, in particular the flying particle sensor or the light source is that it separates sensing and/or scattering functions of the transducer particle from the waveguide design. The hollow waveguide can be optimised without compromise as a low loss pipe for light; it does not need to be coated or doped with special materials, or have special structures written into it (e.g., Bragg or long-period gratings).

The optical waveguide generally comprises a hollow longitudinal structure being capable of guiding at least one light field and accommodating the transducer particle, in particular having a lateral waveguide wall, e. g. a core cladding, which is capable of transmitting the physical interaction between the transducer particle and the environment. Preferably, the optical waveguide is a hollow optical fibre, in particular a PCF, like a photonic band gap fibre, a kagome photonic crystal fibre, a hypocycloid photonic crystal fibre, or a square-lattice photonic crystal fibre. An evacuated or gas-filled, in particular air-filled fibre can be used, wherein transducer particles may have a velocity of several m/s at optical powers of 100 mW. The preferred length of the optical waveguide is at least 1 cm, particularly preferred at least 1 m, e. g. on the order of 100 m or even more than 1 km. Due to the low optical loss of the PCFs, which may be as low as 2 dB/km or smaller, hollow optical fibres having a length of up to several km can be used. The invention can be implemented in a corresponding manner with liquid-filled PCFs, wherein the transducer particle velocities are at least 100 times smaller for similar powers.

Advantageously, all the sensing and scattering-related functions can be provided by the transducer particle, which can be selected from many different types, depending on the requirements of the particular application. Thus, according to preferred embodiments of the invention, the transducer particle comprises at least one of a spherical particle, an elongated particle, a microrobot particle, a particle carrying a functionalizing substance, a deformable particle, a magnetic particle and an electrically charged particle. The microrobot particle is a miniaturized optoelectronic chip sensor and emitter that could be powered by light guiding it in the waveguide.

Almost any particle material can be used, e.g., glass, polymers, solids or liquids, crystals; fluorescent or luminescent materials such as dye-doped polymers and rare-earth doped glasses; magnetic glasses; and materials whose density or refractive index change in the presence of magnetic or electric fields. Other possibilities are non-spherical or nano-structured particles, particles coated with quantum dots, charged particles, liquid droplets, colloids, aerosols and metallic particles with plasmon resonances at the trapping wavelength. At wavelengths far from plasmonic resonances, metallic particles are pushed away from regions of high intensity. Lateral trapping is then possible only in the dark spot at the centre of a (higher order) mode with an annular intensity distribution. Under these conditions the propulsive force is very weak; if however a small proportion of fundamental mode is added, an axial propulsive force can be generated.

The transducer particle has a characteristic dimension, e. g. diameter or cross-sectional size, of at least 1 nm, preferably at least 100 nm, and/or at most 100 µm, preferably at most 10 µm. The transducer particle is made of at least one of a dielectric material, like a plastic material or glass, a metallic material, a semiconductor material and a ceramic material.

According to a further preferred embodiment of the invention, the axial position of the transducer particle along the length of the optical waveguide is measured using Doppler interferometry. Advantageously, the light source device for applying the optical forces, in particular a narrow-line continuous wave laser, also can be used for the position measurement.

With a particularly preferred embodiment of the invention (in the following: first or sensing embodiment of the invention), the step of changing the condition includes changing a probe feature of the transducer particle in dependency on a physical quantity of the external environment. Advantageously, the transducer particle is used as a sensor particle which is influenced by the physical quantity of the external environment to be sensed with spatial resolution. With the first embodiment of the invention, the probe feature of the transducer particle is detected, and the physical quantity of the external environment is determined at the current position of the transducer particle.

Thus, in terms of method features, the first embodiment of the invention is a method of detecting a physical quantity of an external environment using an optical waveguide having a hollow core channel and a transducer particle being movably arranged in the core channel, wherein the detecting method comprises the steps of arranging the optical waveguide in the external environment of the optical fibre, moving and/or positioning the transducer particle by optical forces in the core channel, measuring a current position of the transducer particle in the optical waveguide during said moving step, detecting a probe feature of the transducer particle depending on the physical quantity to be obtained and calculating the physical quantity as a function of the detected probe feature and in dependency on the current position of the transducer particle.

Advantageously, the transducer particle is used as a micro-projectile, optically trapped and propelled inside the hollow optical waveguide core and acting as a movable optical sensor. Enclosed and protected by the waveguide, e. g. the cladding material of the optical fibre (usually fused silica glass), the transducer particle can be propelled along a flexible path through a harsh environment. It can be held stationary or moved backwards by varying optical forces, in particular the power ratio between counter-propagating optical modes, and its precise position can be monitored to interferometric precision using laser Doppler velocimetry. It can also be optically addressed in many different ways, permitting sensitive measurements of external parameters with high spatial resolution.

According to a first preferred variant of the first embodiment of the invention, the detected probe feature is a velocity of the transducer particle along the optical fibre (axial velocity) and the physical quantity of the external environment includes at least one of temperature, pressure and mechanical force acting in a transversal direction onto the optical fibre. The inventors have found that the particle velocity is influenced by thermally-driven gas flows (akin to Knudsen pumps) at hot-spots along the gas-filled hollow core PCF. At these spots the transducer particle will e. g. either slow down and then speed up, overshoot and then return to its original velocity, or come to a complete halt above a certain hot-spot temperature. Thus, the temperature gradient can be sensed with spatial resolution by measuring the particle velocity. Pressure and lateral mechanical forces represent perturbations of the particle as well, which can be sensed by detecting the particle velocity.

According to a second preferred variant of the first embodiment of the invention, the detected probe feature is a luminescence feature, in particular at least one of luminescence intensity, luminescence wavelength and luminescence lifetime, of the transducer particle and the physical quantity of the external environment includes at least one of temperature and ionizing radiation.

According to a further advantageous embodiment of the invention (in the following: second or illuminating embodiment of the invention), the step of changing the condition includes laterally emitting light from the transducer particle out of the optical waveguide into the external environment. Preferred variants of the second embodiment of the invention comprise a photo-activation, a local heating and/or a power delivery being induced in the external environment in response to the light emitted from the transducer particle.

Thus, in terms of method features, the second embodiment of the invention is a method of illuminating an external environment using an optical waveguide having a hollow core channel and a transducer particle being movably arranged in the core channel, wherein the illuminating method comprises the steps of arranging the optical waveguide in the external environment of the optical fibre, moving and/or positioning the transducer particle by optical forces in the core channel, measuring a current position of the transducer particle in the optical waveguide, and irradiating or exciting the transducer particle in dependency on the position of the transducer particle such that scattered and/or emitted light is sent to the surrounding environment.

### Brief description of the drawings

Further details and advantages of the invention are described in the following with reference to the attached drawings, which schematically show in:
- Figure 1:: an illustration of a method of operating an optical waveguide according to the first embodiment of the invention (sensing embodiment);
- Figure 2:: an illustration of a method of operating an optical waveguide according to the second embodiment of the invention (illuminating embodiment);
- Figure 3:: an illustration of an optical waveguide device according to the first embodiment of the invention; and
- Figure 4:: exemplary illustrations of 2D or 3D arrangements of an optical waveguide.

### Preferred embodiments of the invention

Embodiments of the invention are described in the following in particular with reference to utilizing one single transducer particle within an optical waveguide, in particular within a hollow PCF, for obtaining a mutual physical interaction with an external environment, so that the condition of the transducer particle or the environment is changed. It is emphasized that the implementation of the invention is not restricted to the described examples. In particular, another type of optical waveguide can be used instead of the PCF. Furthermore, multiple transducer particles can be utilized instead of the single particle. Multiple transducer particles allow a simultaneous interaction of all particles at different positions with the environment, or a serial interaction of the particles with the environment.

Details of conventional techniques, in particular details of PCFs, the loading of transducer particles into the PCF, the measurement of the position and/or velocity of the transducer particle within the PCF or the detection of particle changes are not described in the following as far as those details are known as such from prior art, in particular from the publications cited above.

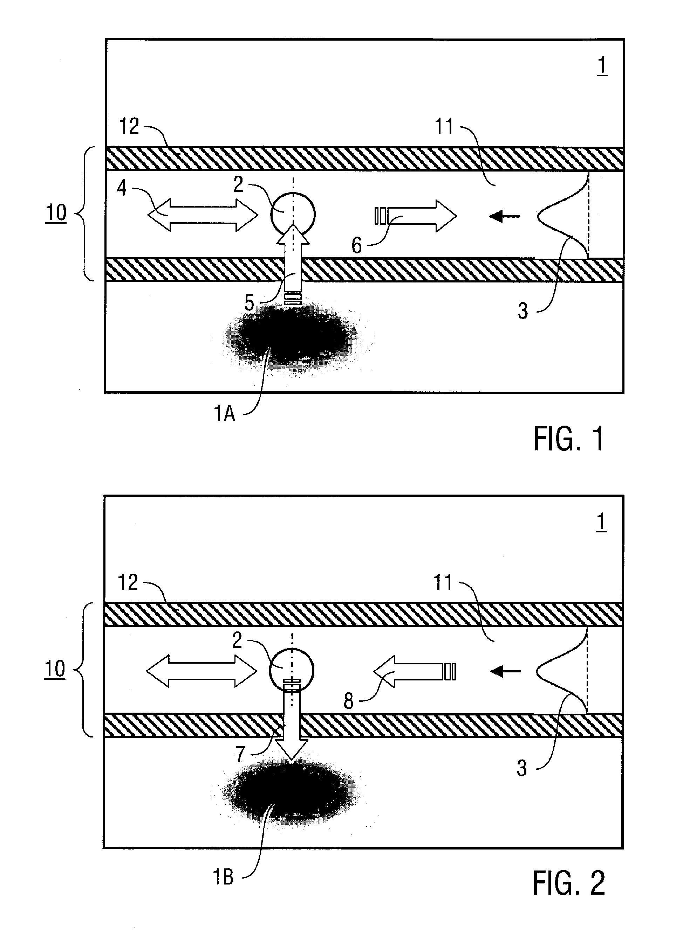

Figure 1 schematically illustrates the first embodiment of the inventive method of operating an optical waveguide 10 within an environment 1 of interest. For illustrative purposes, Figure 1 shows an enlarged section of the optical waveguide 10 and the environment 1 only. The optical waveguide 10 is not drawn to scale.

The optical waveguide 10 comprises a PCF having a hollow core channel 11 and an outer fibre cladding 12. In practice, the hollow core channel 11 has an internal diameter of e.g.
10 µm, while the outer fibre cladding 12 has a radial thickness of about 100 µm. With another variant of the first embodiment of the invention, the optical waveguide 10 may comprise a capillary having a larger internal diameter of e.g. 150 µm.

The transducer particle 2 is arranged within the hollow core channel 11. It comprises e.g. a polymer particle having a diameter of 1 µm. The surface of the transducer particle 2 carries e.g. a layer of fluorescing molecules having a temperature dependent fluorescence intensity or fluorescence lifetime. The transducer particle 2 is trapped within the hollow core channel 11 in a levitated condition, i.e. without a mechanical contact with the outer fibre cladding 12. An optical trap is created by optical forces, which are generated within the optical waveguide 10 by a light source device including at least one laser source or an LED. Within the PCF, the optical trap can be shifted along the longitudinal direction of the PCF, so that the transducer particle 2 can be moved by the optical forces with the optical trap in the hollow core channel 11.

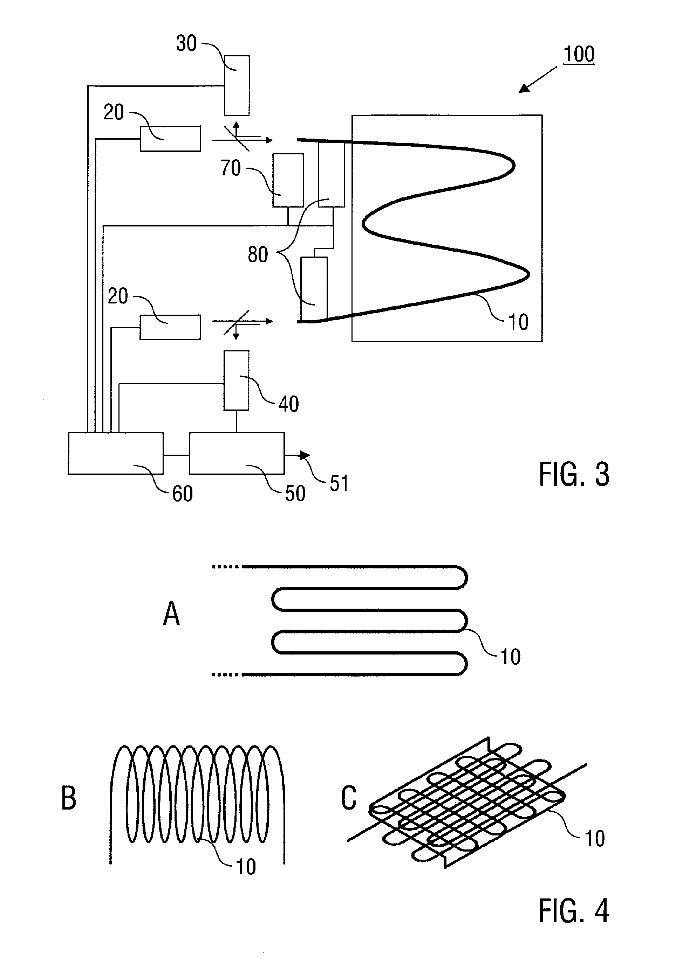

Further details of the electronic detectors and processing equipment, which are placed at the ends of the optical waveguide 10, far away from the (potentially harsh or radioactive) environment where the sensing is to take place, are described below with reference to Figure 3.

Basically, the optical trap within the hollow core channel 11 is created like a dual-beam optical trap. Conventional optical tweezers hold a particle stationary at one point within the Rayleigh length of a single focused laser beam. By varying the relative power of the two counter-propagating laser beams in a dual-beam trap, the trapped particle can be moved over distances of about 1 mm. On the contrary, with the optical waveguide 10, like a hollow-core optical fibre, counter-propagating guided modes 3 of light fields coupled into the fibre allow for particle trapping and guidance along the entire fibre, which can be 100s of metres long and follow a complex curved path. With the illustrated example, the guided modes 3 of the light fields have approximately a Gaussian mode shape. For moving the particle, the optical force of one of the light fields exceeds the optical force of the other counter-propagating light field. If both light fields have optical forces balanced at a certain axial position of the optical fibre, e. g. depending on the optical loss thereof, the particle is trapped at this position. Thus, the particle can be moved or fixed in the fibre by controlling the light field(s) coupled into the fibre. Higher order modes, or mixtures of modes, can be deliberately launched into the hollow core channel 11. Beating between the modes will produce an axially-varying transverse intensity distribution that can be used to perturb the forces on the particle in desirable ways, for example trapping it at eccentric positions in the core. Such mixtures can be generated using spatial light modulators. Conversely, a particle that is not precisely centred in the core will cause coupling of light to higher order modes, which can be used to track the transverse motion of the particle when disturbed by acoustic vibrations or other perturbations.

Momentum transfer from the laser beam modes produces forces in the pN range that trap the transducer particle 2. Once trapped by the light, the position, velocity and orientation of the particle is sensitive to external perturbations, so that it can be used as a sensor. If specially functionalized, the transducer particle 2 can be designed to luminesce, respond to magnetic or electric fields or undergo refractive index, absorption or shape changes in response to external perturbations.

The position of the particle 2 can be monitored using laser Doppler velocimetry, using a continuous wave laser source (narrowband laser source). Light 4 scattered backwards by the moving transducer particle 2 has a frequency shift compared with the driving guided mode 3. The frequency shift is proportional to the velocity. By integrating the velocity, the transducer particle 2 position can be ascertained (resolution λ/2). A less accurate but useful alternative is to exploit the variation in scattering that occurs when a particle moves through the beat pattern created by the superposition of two different core modes (resolution about 100 µm).

With a practical implementation, the optical waveguide 10 is arranged in the external environment 1 of interest. In the external environment 1, certain physical conditions, like a temperature distribution or a distribution of ionizing radiation, are to be investigated. As an example, a region 1A with increased temperature is to be localized. The transducer particle 2 is moved by the optical forces along the hollow core channel 11, wherein the movement may comprise a continuous translation along the longitudinal direction of the hollow core channel 11 or a stepwise movement towards predetermined positions in the optical waveguide 10, which correspond to particular locations of interest within the environment 1. While the transducer particle 2 is moved along the hollow core channel 11 and/or positioned at predetermined detection sites, the measurable physical quantity, like the fluorescence intensity, of the transducer particle 2 is changed depending on the physical interaction (symbolized by arrow 5) with the environment 1. This change is detected, e.g. by measuring the fluorescence (symbolized by arrow 6) created at the transducer particle 2 or the velocity thereof.

The sensing principle of Figure 1 can be correspondingly implemented with other types of transducer particles or physical interactions mentioned above. As an example, with a magnetic transducer particle 2, an outer magnetic field can create a perturbation of the transducer particle 2 within the optical trap. Accordingly, the position and/or the velocity of the transducer particle 2 can be changed. This change can be measured, e.g. by the laser Doppler velocity measurement. As a further example, ionizing radiation can be present in the environment 1, and the transducer particle 2 may have a specific fluorescence lifetime depending on the ionizing radiation intensity. Again, with detecting the fluorescence created at the transducer particle 2, the presence and quantity of the ionizing radiation in the environment 1 can be detected with spatial resolution.

Figure 2 schematically shows the second embodiment of the inventive method of operating an optical waveguide 10 within an external environment 1. This embodiment can be implemented with the same features as described above with reference to Figure 1. However, contrary to the first embodiment, the transducer particle 2 is not utilized as a sensor element, but as a light source for illuminating the environment 1, in particular a limited region 1B within the environment 1. By irradiating the transducer particle 2 through the hollow core channel 11 with an additional excitation light field (symbolized by arrow 8), light is laterally scattered into the environment 1 (symbolized by arrow 7).

With the second embodiment of the invention, a moveable light source is provided. The guided transducer particle 2 scatters light very strongly, a large fraction of it passing out of the fibre through the transparent cladding 12. This side-scattered light can be used for selective photo-activation, local heating or simple power delivery over the entire length of the fibre, which could be up to several km long. The optical waveguide 10 is arranged within the environment 1, and the transducer particle 2 is moved to waveguide positions, which correspond to the environment locations to be illuminated. At the waveguide positions, the transducer particle 2 is excited using the additional excitation light field. Accordingly, scattering or fluorescence light is emitted in a lateral direction from the transducer particle 2 into the environment 1. As an example, light can be delivered with high spatial precision to a tumour site in vivo, so as to photo-activate an anti-cancer drug or simply deliver high dosages of ultraviolet or visible light.

Figure 3 schematically illustrates an example of an optical waveguide device 100, which is adapted for implementing the method according to the first embodiment of the invention. The optical waveguide device 100 comprises an optical waveguide 10, like e.g. a flexible PCF, which is arranged in an environment 1 of interest. The environment 1 comprises e.g. a harsh environment, like e.g. a section in a nuclear power station or in a chemical reactor. The optical waveguide 10 includes the transducer particle as shown in Figures 1 and 2.

Furthermore, the optical waveguide device 100 comprises a light source device 20, which is provided for coupling a light field, preferably laser light, into the optical waveguide 10. With the illustrated example, the light source device 20 comprises two laser sources, which are arranged for coupling light fields into both ends of the optical waveguide 10. The laser sources comprise e.g. a continuous wave or pulsed laser. With a modified variant of the invention, one single laser source could be provided at one end of the optical waveguide 10 only. Furthermore, the laser source device 20 may comprise additional laser sources (not shown) for excitation or interrogation purposes. With further alternatives, at least one light source of the light source device 20 may comprise an LED or another type of broadband light source.

The optical waveguide device 100 includes a Doppler velocimetry unit 30, which is configured for detecting the current position and/or velocity of the transducer particle within the optical waveguide 10. The Doppler velocimetry unit 30 is designed as described e.g. in [5].

A detector device 40 is optically coupled with one end of the optical waveguide 10. The detector device 40 comprises e.g. a photodiode, which is arranged for detecting fluorescence radiation created by the transducer particle in the optical waveguide 10 (see arrow 6 in figure 1) in dependency on the current position of the transducer particle 2. The detector device 40 is coupled with a processor device 50. The processor device 50 is adapted for calculating the physical quantity of the external environment 1 to be sensed in dependency on the current position of the transducer particle and the detector signal of the detector device 40. Furthermore, the processor device 50 is adapted for providing an output 51 of the physical quantity, e. g. for displaying, recording or storing thereof.

Additionally, Figure 3 shows a control device 60, a particle supply device 70 and a waveguide adjustment device 80. The control device 60 is connected with all of the above components for controlling the operation thereof. In particular, the transducer particle can be moved by the light source device 20 on the basis of a predetermined protocol set with the control device 60. Simultaneously, the current position of the transducer particle is measured with the Doppler velocimetry unit 30 and forwarded to the processor device 50. The particle supply device 70 is arranged for providing transducer particles, e.g. as described in [16].

The waveguide adjustment device 80 can be provided for setting operation conditions of the optical waveguide 10, like e.g. the pressure within the optical waveguide 10 or the distribution of the optical waveguide 10 within the environment 1. For adjusting the arrangement of the optical waveguide 10 within the environment 1, the waveguide adjustment device 80 can be connected with moveable support elements (not shown), which are arranged in the environment 1. The support elements can be controlled such that the optical waveguide 10 runs trough all locations of interest within the environment 1. Alternatively, the optical waveguide 10 can be arranged with a fixed distribution within the environment 1.

Examples of optical waveguide distributions are schematically shown in Figure 4. According to Figure 4A, a 2-dimensional distribution is provided. With this variant of the invention, the optical waveguide 10 is arranged within a single plane, e.g. with a meander shape as shown. Alternatively, a 3-dimensional arrangement of the optical waveguide 10 can be provided as shown in Figures 4B and 4C, e.g. with a helical shape or a shape comprising multiple parallel planes.

A preferred system includes a length of optical waveguide 10 (hollow core fibre) 100 m long, wherein the propelling light field is launched into both ends simultaneously. With the particle supply device 70 using a conventional optical tweezers system, the desired particle is lifted to the core entrance and pushed in using the drive light field. The back-scattered Doppler-shifted signal from the particle is used to calculate its velocity and position at every instant. Local perturbations to particle velocity and transverse position can be detected by changes in the back-scattered signal at another probe wavelength, and fluorescence can be pumped using yet another laser wavelength. Use of different types of particle further widens the range of potential applications as follows.

For radiation monitoring, a transducer particle is introduced that luminesces in response to ionising radiation. The luminescence is collected by the optical waveguide 10 and detected at the fibre end. In combination with the measured particle positions, the luminescence intensity yields the precise distribution of radioactivity along the fibre path. Alternatively, if the particle, made of e. g. radiochromic materials, responds to radiation in a cumulative manner, it can be held at a particular position for a specified period of time and then retrieved and analysed for radiation dosage. It would function like a micro-dosimeter.

With thermometry applications, the particle velocity itself depends on the viscosity, which for a gas depends on the temperature, providing a means of rapidly measuring the temperature distribution along a long fibre. In a gas-filled hollow core PCF, the particle velocity is strongly influenced by thermally-driven gas flows at hot-spots along the fibre. Fluorescence lifetime measurements (and other fluorescence-related techniques) on suitably doped particles allow monitoring of the temperature distribution as well. If the particle material were thermochromic, the fluorescence or luminescence would change colour with temperature.

The optical waveguide device 100 provides a transverse force sensor when moving the transducer particle away from the core channel centre changes the propulsive force, changes the back/forward scattered signals and/or causes the excitation of higher order modes. Perturbations that push the transducer particle away from the core centre (such as electric or magnetic fields or acoustic vibrations) could then be monitored via fluctuations in the optical signals at the fibre ends, providing a means of sensing the local conditions at a reconfigurable point along the fibre.

An optically powered microbot transducer particle could act as a detector for light, electromagnetic fields or vibrations. The information generated by the microbot could be sent back optically along the fibre (perhaps at another wavelength) or via radio transmission. Since the microbot would not need to be kept permanently in position, damage or failure (for example by exposure to ionising radiation) would not be a problem; a damaged microbot could simply be replaced.

A linear Paul trap can be constructed by incorporating three (or more) metallic wires into the fibre cladding, far from the core so as not to cause optical loss. When driven with suitable RF voltages, charged transducer particles can be trapped stably close to the core centre. Light guided in the core can then be used to propel the charged transducer particles along the fibre, or hold it stationary at one position. It is however no longer needed to provide lateral confinement.

The features of the invention disclosed in the above description, the figures and the claims can be equally significant for realizing the invention in its different embodiments, either individually or in combination.

## Claims

1. Method of operating a transducer particle (2) in an optical waveguide (10) having a hollow core channel (11), wherein the transducer particle (2) is movably arranged in the core channel (11), comprising the steps of
- arranging the optical waveguide (10) in an external environment (1) of the optical waveguide (10),
- moving and/or positioning the transducer particle (2) by optical forces in the core channel (11),
- measuring a current position of the transducer particle (2) in the optical waveguide (10), and
- changing a condition of at least one of the transducer particle (2) and the external environment (1) by a mutual physical interaction of the transducer particle (2) and the external environment (1), wherein said condition is changed in dependency on the current position of the transducer particle.

2. Method according to claim 1, wherein the transducer particle (2) comprises at least one of
- a spherical particle,
- an elongated particle,
- a microrobot particle,
- a deformable particle,
- a particle carrying a functionalizing substance,
- a magnetic particle, and
- an electrically charged particle.

3. Method according to one of the foregoing claims, wherein
- the position of the transducer particle (2) in the optical waveguide (10) is measured using Doppler interferometry.

4. Method according to one of the foregoing claims, wherein said condition changing step includes changing a probe feature of the transducer particle (2) in dependency on a physical quantity of the external environment (1), and the method comprises the further steps of
- detecting the probe feature of the transducer particle (2), and
- determining the physical quantity of the external environment (1) in dependency on the current position of the transducer particle (2).

5. Method according to claim 4, wherein
- the probe feature of the transducer particle (2) includes a velocity of the transducer particle (2) and the physical quantity of the external environment (1) includes at least one of temperature, pressure and a mechanical force acting in a transversal direction onto the optical fibre, and/or
- the probe feature of the transducer particle (2) includes a luminescence feature of the transducer particle (2) and the physical quantity of the external environment (1) includes at least one of temperature and ionizing radiation.

6. Method according to claim 5, wherein
- the probe feature of the transducer particle (2) includes the luminescence feature of the transducer particle (2), and
- the luminescence feature includes at least one of luminescence intensity, luminescence wavelength and luminescence lifetime.

7. Method according to one of the foregoing claims, wherein said condition changing step includes laterally emitting light from the transducer particle (2) into the external environment (1).

8. Method according to claim 7, wherein
- in response to the light emitted into the external environment (1), at least one of a photo-activation, a local heating and a power delivery is induced in the external environment (1).

9. Optical waveguide device (100), which is adapted to be operated in an external environment (1) of interest, comprising
- an optical waveguide (10) having a hollow core channel (11),
- a transducer particle (2) being movably arranged in the core channel (11),
- a light source device (20) being arranged for coupling a light field into the optical waveguide (10) and for moving and/or positioning the transducer particle (2) by optical forces along the optical waveguide (10),
- a measuring device (30) being arranged for measuring a current position of the transducer particle (2) in the optical waveguide (10), wherein
- the optical waveguide device (100) is arranged for changing a condition of at least one of the transducer particle (2) and the external environment by a mutual physical interaction of the transducer particle (2) and the external environment (1), wherein said condition can be changed in dependency on the current position of the transducer particle.

10. Optical waveguide device according to claim 9, wherein the transducer particle (2) comprises at least one of
- a spherical particle,
- an elongated particle,
- a microrobot particle,
- a deformable particle,
- a particle carrying a functionalizing substance,
- a magnetic particle, and
- an electrically charged particle.

11. Optical waveguide device according to one of the claims 9 to 10, wherein
- the measuring device (30) includes a Doppler interferometry unit.

12. Optical waveguide device according to one of the claims 9 to 11, wherein said condition changing step includes changing a probe feature of the transducer particle (2) in dependency on a physical quantity of the external environment (1), and the optical waveguide device (100) further comprises
- a detector device (40) being arranged for detecting the probe feature of the transducer particle, and
- a processor device (50) being adapted for determining the physical quantity of the external environment (1) in dependency on the current position of the transducer particle.

13. Optical waveguide device according to claim 12, wherein
- the probe feature of the transducer particle (2) includes a velocity of the transducer particle (2) and the processor device is adapted for determining at least one of temperature, pressure and mechanical force acting in a transversal direction onto the optical fibre, and/or
- the probe feature of the transducer particle (2) includes a luminescence feature of the transducer particle (2) and the processor device is adapted for determining at least one of temperature and ionizing radiation.

14. Optical waveguide device according to one of the claims 9 to 11, wherein
- said condition changing step includes laterally emitting light from the transducer particle (2) into the external environment (1), and
- the transducer particle (2) is configured as a radiation source.
